Europäisches Patentamt

European Patent Office

Office européen des brevets

(19)

(11) Publication number: **0 079 249**
**A2**

# (12) EUROPEAN PATENT APPLICATION

(21) Application number: **82306002.5**

(22) Date of filing: **11.11.82**

(51) Int. Cl.³: **G 02 B 7/26**

(30) Priority: **11.11.81 GB 8133990**

(43) Date of publication of application:
**18.05.83 Bulletin 83/20**

(84) Designated Contracting States:
**AT BE CH DE FR IT LI LU NL SE**

(71) Applicant: **BICC Public Limited Company**
**21, Bloomsbury Street**
**London, WC1B 3QN(GB)**

(72) Inventor: **Wong, John Shunon**
**46 Fairfield Crescent**
**Liverpool, L6 8PJ Merseyside(GB)**

(72) Inventor: **Britch, Wilfred Trevor**
**39 Cowley Hill Lane**
**St. Helens Merseyside(GB)**

(74) Representative: **Ross Gower, Edward Lewis**
**BICC Limited Patents Department 38 Ariel Way Wood Lane**
**London W12 7DX(GB)**

(54) **Optical fibre connector part.**

(57) An optical fibre connector part comprises an elongate body 1 of moulded clear material having two opposed end surfaces 2, 3 one of which defines a collimating lens 4 and having, in the body, a slot 6 which extends longitudinally from the end surface 3 remote from the lens to the focus 5 of the lens and transversely to an outer peripheral surface of the body and, engageable in the slot, separately formed means 11 for retaining an end portion of an optical fibre in the slot with its end face at the focus of the lens.

*Fig.1.*

EP 0 079 249 A2

## OPTICAL FIBRE CONNECTOR PART

This invention relates to an optical fibre connector part comprising an elongate body of moulded clear material having two opposed end surfaces one of which defines a collimating lens, and means for supporting an end face of an optical fibre at the focus of the lens.

Optical fibre connectors which include optical fibre connector parts incorporating collimating lenses to couple two optical fibres or an optical fibre to a light source or detector are described in United Kingdom Patent Specifications Nos. 1429843 and 1537477. Connectors of this type are particularly versatile and convenient as a connector part may be used in a variety of applications and the distance between the collimating lenses of the respective connector parts is not critical.

Whereas the above-mentioned specifications particularly disclose connector parts wherein the lens is separate from means for supporting an end face of an optical fibre at the focus of the lens, the problems of alignment of the end face of an optical fibre with the focus of the collimating lens are eased if the lens and supporting means are incorporated in a single body or lens element. This arrangement allows the necessary tolerances to ensure correct alignment to be introduced during manufacture of the body or lens element and thereby permits easy assembly of a connector without the necessity for specialised equipment.

Such a connector part is described in United Kingdom Patent Specification No. 1579027 and includes an elongate body or lens element having, in the end opposite the lens, a blind hole which, over a portion of its length nearer the blind end of the hole, is of a diameter matched to an optical fibre and which, over the remaining portion of its length, is of a greater diameter. According to that specification this body or lens element may be a one-piece plastics moulding. However, accurate manufacture of a moulded plastics body with a blind hole having, over at least a part of its length, a diameter matched to an optical fibre and arranged in axial alignment with the lens is so difficult as to be impractical. For example, when making such a connector part for an optical fibre having a diameter of 125 $\mu$m, the diameter of the portion of the blind hole nearer its blind end is typically 130 $\mu$m. In an alternative method of manufacture, the blind hole can be formed in the moulded body by a drilling operation but such an operation requires accurate control to ensure that the blind end of the hole is correctly positioned at the focus of the lens and, by its nature, this drilling operation has to be effected for each connector part made. Moreover, the blind hole is vulnerable to the ingress of foreign bodies or slivers of the moulded material produced by the drilling operation and/or by insertion of an optical fibre. Furthermore, there is a real risk that during insertion of an optical fibre into the blind hole, the optical fibre may be damaged to such an extent as to produce unacceptable high losses in the fibre.

It is an object of the present invention to provide an improved optical fibre connector part which is simple and inexpensive to manufacture, which can be readily produced in quantity, and which is of such a construction that removal of any foreign bodies in the connector part can be readily effected prior to introduction of an optical fibre and that risk of damage to an optical fibre during its introduction into the connector part is substantially reduced.

According to the invention, the improved optical fibre connector part comprises an elongate body of moulded clear material having two opposed end surfaces one of which defines a collimating lens, and means for supporting an end face of an optical fibre at the focus of the lens, wherein the elongate body has a slot therein extending longitudinally from the end surface remote from the lens to the focus of the lens and transversely to an outer peripheral surface of the elongate body and has, engageable in the slot, separately formed means for retaining an end portion of an optical fibre in the slot with its end face at the focus of the lens.

The provision in the elongate body of a slot opening into an outer peripheral surface of the body facilitates removal of any foreign bodies within the slot prior to insertion of an optical fibre. In addition, an optical fibre can be introduced into the slot laterally with respect to the elongate body, thereby substantially reducing both risk of damage to the optical fibre and risk that the optical fibre will produce slivers of the moulded material during lengthwise introduction of the optical fibre. Furthermore, since the elongate body with the slot therein can be moulded in a single operation without any subsequent machining operation, the cost of manufacture is substantially reduced and identical moulded elongate bodies can be readily produced in quantity.

Preferably, the radially inner portion of the slot contains the axis of the lens and is of such a transverse cross-sectional shape and size as to prevent significant lateral movement of the end portion of an optical fibre with respect to the elongate body. In a preferred embodiment, the radially inner portion of the slot is defined in part by a pair of walls which are substantially parallel with one another and which are disposed on opposite sides of a plane containing the axis of the lens.

The slot is preferably of a length lying in the range 20 to 60 times the transverse dimension of the radially inner portion of the slot thereby providing support for a substantial length of an optical fibre adjacent its end face.

To facilitate still further the lateral introduction of an optical fibre into the slot, preferably the radially outer portion of the slot is defined at least in part by a pair of walls disposed on opposite sides of, and each inclined at an acute angle to, said plane containing the axis of the lens. The surfaces of this pair of walls preferably lie in planes which contain the longitudinal axis of the elongate body. In a preferred embodiment the axis of the lens and the longitudinal axis of the elongate body are co-linear.

The transverse cross-sectional shape and size of the separately formed retaining means are preferably substantially complementary to those of the slot in the elongate body. Where, as is preferred, the radially inner portion of the slot is defined in part by a pair of substantially parallel walls disposed on opposite sides of a plane containing the axis of the lens, the separately formed retaining means will have a fin which engages between these parallel walls and serves as a key preventing lateral movement of the retaining means with respect to the elongate body.

The elongate body preferably has a transverse cross-section of substantially circular shape.

The elongate body may be of moulded glass but preferably is of moulded clear plastics material.

The separately formed retaining means may be of any convenient material but preferably is of moulded plastics material. The separately formed retaining means preferably has a severable handle for facilitating insertion of the retaining means in the slot during assembly of the connector part.

The invention also includes an optical fibre connector incorporating at least one improved connector part as hereinbefore described.

In order that the invention can be further understood and readily put into practice, a preferred optical fibre connector part and a preferred optical fibre connector incorporating two optical fibre connector parts will now be described, by way of example, with reference to the accompanying drawings, in which:-

Figure 1 is a side view, partly in section and partly in elevation, of the elongate body of the preferred optical fibre connector part;

Figure 2 is an end view of the elongate body as seen in the direction of arrow A in Figure 1;

Figure 3 is a side view of the separately formed optical fibre retainer of the preferred optical fibre connector part;

Figure 4 is a plan view of the separately formed retainer as seen in the direction of arrow B in Figure 3;

Figure 5 is a sectional view of the separately formed retainer taken on the line V-V in Figure 4;

Figure 6 is a sectional side view of the preferred optical fibre connector, and

Figures 7 and 8, respectively, are cross-sectional views of the optical fibre connector taken on the lines VII-VII and VIII-VIII in Figure 6.

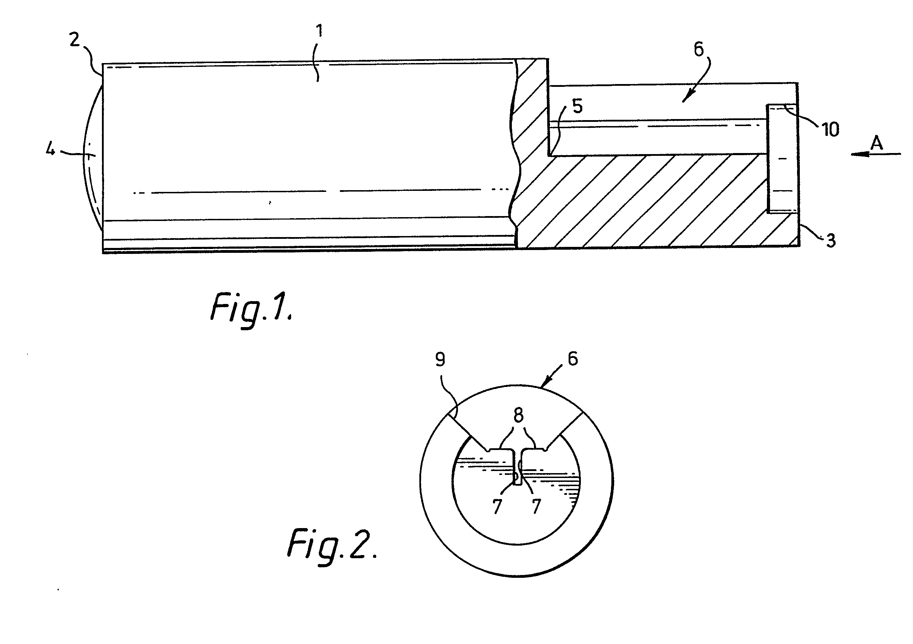

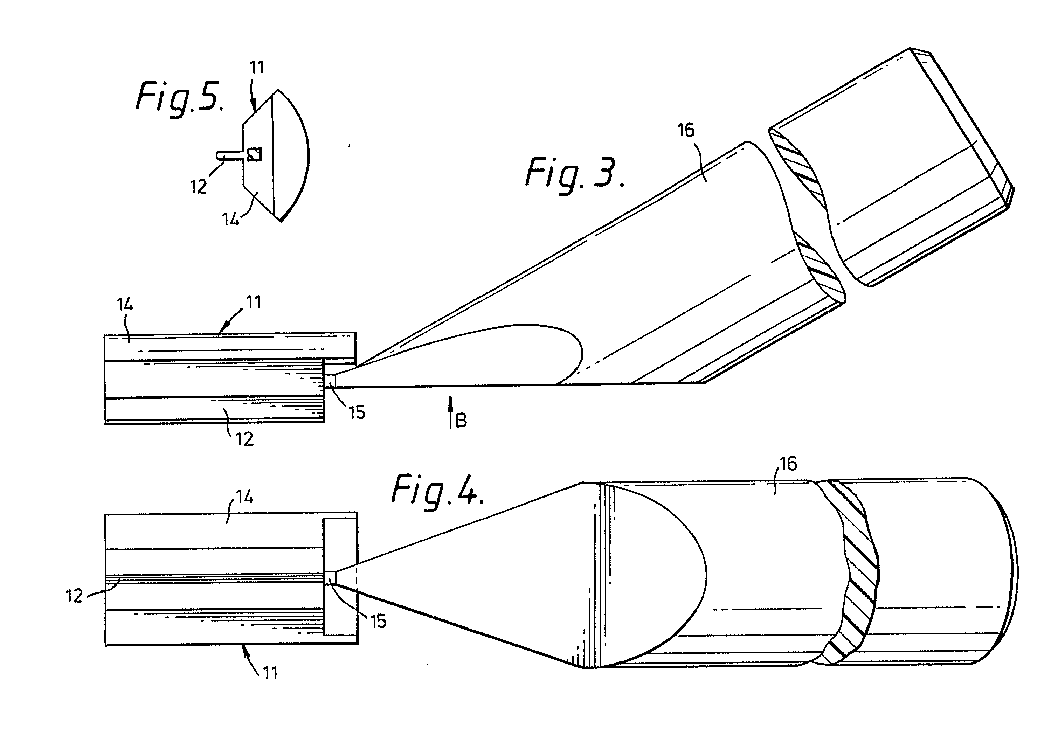

Referring to the drawings, the preferred optical fibre connector part comprises the elongate body 1 shown in Figures 1 and 2 and the separately formed optical fibre retainer 11 shown in Figures 3, 4 and 5.

The elongate body 1 shown in Figures 1 and 2 is of injection moulded clear acrylic resin and has two opposed end surfaces 2 and 3, the body being of circular cross-section and having an overall length of 11.33 mm and an overall diameter of 3.00 mm. A central part of the end surface 2 defines a collimating lens 4 having a focus at 5. Extending from the end surface 3 to the focus 5 is a slot 6 which also extends transversely to the outer circumferential surface of the elongate body, the slot having an overall length of 3.83 mm. As will be seen on

referring to Figure 2, the slot 6 comprises a radially inner portion defined by a pair of walls 7 which are parallel with one another and which are disposed on opposite sides of a plane containing the axis of the lens 4, which axis is also the longitudinal axis of the elongate body 1, and a radially outer portion defined by a pair of radially extending walls 9 disposed on opposite sides of, and each inclined at an angle of 45° to, said plane and by a pair of walls 8 disposed on opposite sides of, and each normal to, said plane. The regions where the walls 8 join the walls 9 are slightly undercut to enable the retainer 11 to be more readily fitted in the slot 6. The transverse dimension between the substantially parallel walls 6 is such that these walls will prevent significant lateral movement of the end portion of an optical fibre of diameter 125 µm with respect to the elongate body 1.

In the end surface 3 of the elongate body 1 is a circular recess 10 which provides clearance for the gate of the moulded elongate body 1. Alternatively, this gate position may be on the outer peripheral surface of the elongate body 1 at a position diametrically opposite the opening of slot 6 in the outer peripheral surface of the elongate body.

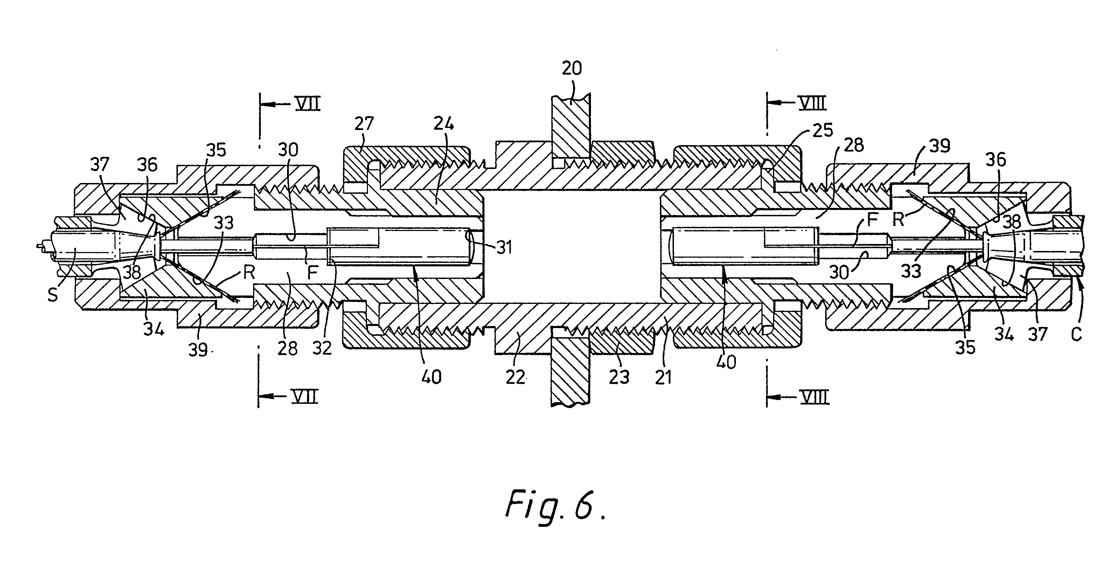

The separately formed optical fibre retainer 11 shown in Figures 3 to 5 is of injection moulded clear acrylic resin and, as will be seen on referring to Figure 5, is of a transverse cross-sectional shape and size complementary to those of the slot 6 in the elongate body 1. The optical fibre retainer 11 has an overall length of 3.83 mm and comprises a radially inner fin 12 serving, in effect, as a key engaging between the substantially parallel walls 7 of the slot 6 in the elongate body 1 and a radially outer portion 14 adapted to engage between the inclined walls 9 of the slot. Integral with the optical fibre retainer 11 via a severable neck 15 is a handle 16 conveniently formed by the sprue arising from injection moulding of the optical fibre retainer.

When an optical fibre is to be accommodated in the optical fibre connector part, any protective covering surrounding an end portion of the fibre is removed and, if necessary, the end face of the fibre is cleaved. After the slot 6 in the elongate body 1 has been cleaned to ensure there are no foreign bodies in the slot, an index-matching liquid is introduced into the blind end of the slot and the stripped end portion of the optical fibre is fed laterally into the slot until it is positioned between the parallel walls 7 with its end face abutting the end of the slot and therefore located at the focus 5 of the lens 4. The optical fibre retainer 11 is then slidably engaged in the slot 6 with the aid of the handle 16 with the fin 12 positioned between the parallel walls 7 and thereby preventing lateral movement of the retainer with respect to the elongate body. After the retainer 11 is in position, the handle 16 can be severed at the neck 15.

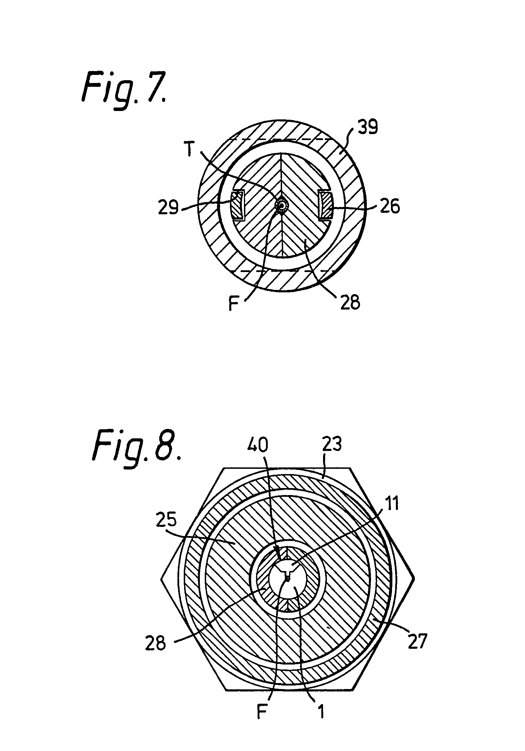

The optical fibre connector shown in Figures 6 to 8 comprises a metal housing 21 which passes through a hole in a supporting wall 20 and which is clamped between a shoulder 22 on the housing and a nut 23 in screw threaded engagement with the housing. At each end of the optical fibre connector an optical cable C, which comprises an optical fibre F loosely housed in a buffer tube T, two non-metallic reinforcing members R and an overall protective sheath S, is clamped in the connector with the optical fibre positioned in an optical fibre connector part of the kind shown in Figures 1 to 5. The two ends of the optical fibre connector are substantially identical in construction.

At each end ofthe optical fibre connector a sleeve 24 having an outwardly extending flange 25 and a pair of diametrically opposed radially inwarding protruding longitudinally extending ribs 26 is slidably engaged in the housing 21 with the flange abutting an end face of the housing and is locked in this position by a gland nut 27 in screw threaded engagement with the housing. Slidably mounted in the bore of the sleeve 24 are a pair of collets 28 of plastics material which have diametrically opposed grooves 29 for reception of the ribs 26 and which define a bore 30 for reception of an optical fibre connector part 40 between two longitudinally spaced shoulders 31 and 32 in the bore and for reception of the buffer tube T and optical fibre F of the optical cable C. At their outer ends the collets 28 form a frusto-conical bearing surface 33 against which the reinforcing members R of the optical cable C are clamped by a compression collar 34 having a surface 35 of a shape complementary to that of the frusto-conical surface 33. The collar 34 also has a surface 36 which is engaged by the frusto-conical surface 38 of a cable gripping device 37, the cable gripping device being urged against the collar 34 and the collar being urged against the frusto-conical surface 33 of the collets 28 by a gland nut 39 which is in screw threaded engagement with the sleeve 24.

In assembling the optical fibre connector shown in Figures 6 to 8, after the housing 21 has been clamped to the wall 20 by the nut 23, at each end of the connector the optical cable C is passed through the gland nut 39, the cable gripping device 37 and the collar 34 and the cable sheath S is cut back to expose the reinforcing members R and the buffer tube T and the buffer tube is cut back to expose an end portion of the optical fibre F. After the end of the optical fibre F has been cleaved and an index matching liquid introduced into the blind end of the slot 6 of the optical fibre connector part 40 as described with reference to Figures 1 to 5, the end portion of the optical fibre F is fitted into the optical fibre connector part and the assembled optical fibre connector part is positioned between the shoulders 31 and 32 in the bore 30 bounded by the collets 28. After the sleeve 24 has been fitted in the end of the housing 21 and the gland nut 27 tightened, the collets are slidably engaged in the bore of the sleeve 24 with the ribs 26 engaging in the grooves 29 to prevent relative rotation between the collets and the sleeve and the gland nut 39 is tightened to clamp the reinforcing members R between the frusto-conical surface 33 of the collets 28 and the surface 35 of the collar 34 and to cause the cable gripping device 37 to grip the cut back end of the cable sheath S.

CLAIMS:

1.    An optical fibre connector part comprising an elongate body of moulded clear material having two opposed end surfaces one of which defines a collimating lens, and means for supporting an end face of an optical fibre at the focus of the lens, wherein the elongate body has a slot therein extending longitudinally from the end surface remote from the lens to the focus of the lens and transversely to an outer peripheral surface of the elongate body and has, engageable in the slot, separately formed means for retaining an end portion of an optical fibre in the slot with its end face at the focus of the lens.

2.    A connector part as claimed in Claim 1, wherein a radially inner portion of the slot contains the axis of the lens and is of such a transverse cross-sectional shape and size as to prevent significant lateral movement of the end portion of an optical fibre with respect to the elongate body.

3.    A connector part as claimed in Claim 2, wherein the radially inner portion of the slot is defined in part by a pair of walls which are substantially parallel with one another and which are disposed on opposite sides of a plane containing the axis of the lens.

4.    A connector part as claimed in Claim 3, wherein the radially outer portion of the slot is defined at least in part by a pair of walls disposed on opposite sides of, and each inclined at an acute angle to, said plane.

5. A connector part as claimed in Claim 4, wherein the surfaces of the pair of walls defining at least in part the radially outer portion of the slot lie in planes which contain the longitudinal axis of the elongate body.

6. A connector part as claimed in any one of the preceding Claims, wherein the transverse cross-sectional shape and size of the separately formed retaining means are substantially complementary to those of the slot in the elongate body.

7. A connector part as claimed in any one of the preceding Claims, wherein the elongate body has a transverse cross-section of substantially circular shape.

8. A connector part as claimed in any one of the preceding Claims, wherein the elongate body and the separately formed retaining means are each of moulded clear plastics material.

9. A connector part as claimed in any one of the preceding Claims, wherein the separately formed retaining means has a severable handle for facilitating insertion of the retaining means in the slot during assembly of the connector part.

10. An optical fibre connector incorporating at least one connector part as claimed in any one of the preceding Claims.

Fig.1.

Fig.2.

Fig.5.

Fig. 3.

Fig.4.

0079249

Fig.6.

3/4

0079249

**Fig.7.**

**Fig.8.**